(19) Europäisches Patentamt / European Patent Office / Office européen des brevets

(11) **EP 4 718 408 A1**

(12) **DEMANDE DE BREVET EUROPEEN**

(43) Date de publication:
**01.04.2026  Bulletin 2026/14**

(21) Numéro de dépôt: **25197377.2**

(22) Date de dépôt: **21.08.2025**

(51) Classification Internationale des Brevets (IPC):
**G07D 7/0043** (2016.01)   **G07D 7/12** (2016.01)
**G07D 7/20** (2016.01)   **G07D 7/2033** (2016.01)

(52) Classification Coopérative des Brevets (CPC):
**G07D 7/0043; G07D 7/12; G07D 7/2008;
G07D 7/2016; G07D 7/2033**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **30.09.2024  FR 2410461**

(71) Demandeur: **IDEMIA Civil Identity NA LLC
Bedford, MA 01730 (US)**

(72) Inventeur: **MAYER, Joseph
RESTON, 20190 (US)**

(74) Mandataire: **IPS
2, place Samuel de Champlain
92400 Courbevoie (FR)**

(54) **DOCUMENT D'IDENTIFICATION ET PROCEDES DE FABRICATION ET D'AUTHENTIFICATION D'UN TEL DOCUMENT**

(57)   Procédé de fabrication d'un document d'identification (1), comprenant les étapes suivantes :
• impression sur le document d'identification (1) d'un motif d'arrière-plan (S1), le motif d'arrière-plan (10a, 10b) comprenant des motifs contrastés recouvrant au moins partiellement un champ de texte (Tf1) du document d'identification ;
• impression d'une information d'identification (S2) dans le champ de texte (Tf1), l'information d'identification comprenant un ou plusieurs caractères ;
• sélection d'une partie de motif (S3) d'une image du document d'identification (1), la partie de motif (11a, 11b) comprenant au moins un caractère de l'information d'identification et une partie du motif d'arrière-plan se recouvrant;
• codage de la partie de motif sélectionnée (11a, 12a) en un code lisible par machine (S4) ;
• impression (S5) du code lisible par machine (13a) sur le document d'identification (1).

**Description**

DOMAINE DE L'INVENTION

La présente invention concerne des documents utilisés pour identifier des personnes ou des produits.

CONTEXTE DE L'INVENTION

Les techniques d'authentification de documents sont essentielles pour assurer la validité et l'intégrité de documents dans divers domaines, y compris dans les secteurs juridique, financier et gouvernemental. Ces techniques englobent une gamme de procédés conçus pour vérifier l'authenticité de documents physiques et numériques, protégeant contre la contrefaçon, la falsification et la fraude. Ils contribuent non seulement à protéger les informations sensibles, mais aussi à favoriser la confiance et la fiabilité dans les transactions et les communications de documents.

Les procédés traditionnels de réalisation d'une telle authentification impliquent, par exemple, le recours à des caractéristiques de sécurité connues à partir de de la conception d'un document, telles que des filigranes, des hologrammes ou des encres spécialisées.

De telles approches ont longtemps été utilisées pour sécuriser les documents physiques. Elles sont souvent génériques pour un type de document donné, ce qui signifie que toute authentification sur un justificatif d'identité donné pour un type de document vérifiera les mêmes caractéristiques. Par conséquent, si un fraudeur crée une fausse présentation à partir d'un échantillon reconnu authentique, le faux document peut hériter de nombreuses caractéristiques utilisées dans ces efforts d'authentification, voire de toutes ces caractéristiques.

Parallèlement, l'avènement des technologies numériques a introduit de nouvelles solutions telles que les signatures numériques, la *blockchain* et la vérification biométrique. Cependant, ces solutions présentent également des inconvénients tels qu'une mise en œuvre complexe et coûteuse, une vulnérabilité aux cyberattaques ou des problèmes de confidentialité. De plus, l'intégration de nouvelles technologies d'authentification numériques aux systèmes existants peut s'avérer difficile. Assurer la compatibilité et l'interopérabilité entre les différents dispositifs et plateformes exige des efforts et des ressources considérables.

Par conséquent, il existe un besoin en techniques d'authentification pour les documents existants avec une sécurité améliorée et une résistance à la fraude.

RÉSUMÉ DE L'INVENTION

L'invention vise à améliorer la fiabilité de la détection de fraudes pour des systèmes d'authentification de justificatifs d'identité sécurisés en utilisant l'analyse par vision par ordinateur.

Pour ce faire, l'invention concerne un procédé de fabrication d'un document d'identification, comprenant les étapes suivantes :

- impression sur le document d'identification d'un motif d'arrière-plan, le motif d'arrière-plan comprenant des motifs contrastés recouvrant au moins partiellement un champ de texte du document d'identification ;
- impression d'une information d'identification dans le champ de texte, l'information d'identification comprenant un ou plusieurs caractères ;
- sélection d'une partie de motif d'une image du document d'identification, la partie de motif comprenant au moins un caractère de l'information d'identification et une partie du motif d'arrière-plan se recouvrant ;
- codage de la partie de motif sélectionnée en un code lisible par machine ;
- impression du code lisible par machine sur le document d'identification.

L'identification peut être utilisée pour authentifier une personne ou un objet de manière sécurisée. En effet, lors de la fabrication du document d'identification, un code lisible par machine est imprimé. Le code imprimé lisible par machine code une partie de motif correspondant à une image comprenant un caractère et un motif d'arrière-plan distinctif. Lors de l'authentification d'un document, le document peut être rejeté si la partie de motif sur le document ne correspond pas à la partie de motif codée. Cela offre d'autres possibilités de détection de documents modifiés ou fabriqués. En effet, si l'information d'identification dans le champ de texte est modifiée, le caractère et le motif d'arrière-plan doivent différer de ceux de la partie de motif codée, ce qui entraîne des images différentes lors de l'authentification du document. La solution peut également être ajoutée à des conceptions de documents existants pour fournir une sécurité accrue de détection de fraudes.

D'autres aspects préférés, bien que non limitatifs, de l'invention sont les suivants, isolés ou dans une combinaison techniquement réalisable :

- le motif d'arrière-plan recouvre entièrement le champ de texte ;

- le motif d'arrière-plan est conçu de manière à produire un résultat binaire prévisible lorsqu'une méthode de seuillage proposée par Nobuyuki Otsu est appliquée ;

- les motifs contrastés du motif d'arrière-plan ne recouvrent pas périodiquement le champ de texte ;

- l'au moins un caractère est le dernier caractère de l'information d'identification, et la partie de motif sélectionnée comprend une partie du champ de texte qui suit le dernier caractère ;

- le codage de la partie de motif sélectionnée comprend la binarisation de la partie de motif sélectionnée à l'aide d'un seuil de binarisation ;

- le codage de la partie de motif sélectionnée comprend l'application d'un algorithme de compression à la partie de motif sélectionnée ;

- le procédé comprend en outre une étape de codage d'informations de métadonnées dans le code lisible par machine avant l'impression du code lisible par machine sur le document d'identification, les informations de métadonnées comprenant au moins une information parmi une information d'emplacement de la partie de motif sélectionnée dans le document d'identification, et un seuil de sécurité pour l'authentification du document d'identification ;

- le procédé comprend en outre une étape de signature chiffrée du code lisible par machine avant l'impression du code lisible par machine signé sur le document d'identification ;

- le code lisible par machine est imprimé sur le document d'identification avec une qualité comprise entre 200 ppp et 400 ppp ;

- le code lisible par machine est imprimé au moins partiellement à l'encre ultraviolette, de préférence sur un portrait fantôme du document d'identification ;

- le code lisible par machine est un code QR.

L'invention concerne également un document d'identification comprenant au moins un champ de texte dans lequel est imprimée une information d'identification, l'information d'identification comprenant un ou plusieurs caractères, et dans lequel un motif d'arrière-plan est imprimé sur le document d'identification, le motif d'arrière-plan comprenant des motifs contrastés recouvrant au moins partiellement le champ de texte, et dans lequel un code lisible par machine est imprimé sur le document d'identification, le code lisible par machine codant une partie de motif d'une image du document d'identification qui comprend au moins un caractère de l'information d'identification et une partie du motif d'arrière-plan se recouvrant, de préférence la partie du motif d'arrière-plan étant chevauchée par le ou les caractères.

Le document d'identification est, par exemple, un document d'identification personnel parmi une carte d'identité personnelle, un permis de conduire ou un passeport.

Selon un autre aspect, il est proposé un procédé d'authentification du document d'identification décrit ci-dessus, comprenant les étapes suivantes :

- obtention d'une information authentifiée correspondant à une partie de champ de texte du document d'identification, par décodage du code lisible par machine ;
- extraction d'une information d'entrée d'une image du document d'identification, l'information d'entrée extraite comprenant la partie de champ de texte du document d'identification ;
- comparaison de l'information d'entrée extraite avec l'information authentifiée, la comparaison aboutissant à un score de correspondance de similarité ;
- fourniture d'un résultat d'authentification à partir du score de correspondance de similarité.

Généralement, le résultat d'authentification est positif si le score de correspondance de similarité est supérieur à une valeur de seuil de sécurité, et le résultat d'authentification est négatif si le score de correspondance de similarité est inférieur à la valeur de seuil de sécurité.

D'autres aspects préférés, bien que non limitatifs, du procédé d'authentification sont les suivants, isolés ou dans une combinaison techniquement réalisable :

- le procédé comprend en outre l'obtention d'une information d'emplacement par lecture du code lisible par machine, et l'information d'entrée est extraite à partir de l'information d'emplacement ;

- l'information authentifiée est une image en niveaux de gris, et le procédé comprend en outre la conversion de l'information d'entrée extraite en une image en niveaux de gris avant la comparaison ;

- l'information authentifiée est une image en noir et blanc, et le procédé comprend en outre l'obtention d'une valeur seuil de binarisation par lecture du code lisible par machine et la conversion de l'information d'entrée extraite en une image en noir et blanc sur la base de la valeur seuil de binarisation avant l'étape de comparaison ;

- le score de correspondance de similarité est l'un parmi une corrélation croisée, un coefficient de corrélation, et une somme de différences au carré ;

- le code lisible par machine est chiffré à l'aide d'une signature numérique, et le procédé comprend en outre une authentification du code lisible par machine par validation de la signature numérique avant la comparaison, le résultat d'authentification étant négatif si la signature numérique n'est pas validée.

Dans un autre aspect, il est proposé un système d'authentification comprenant un processeur configuré pour mettre en œuvre le procédé d'authentification décrit ci-dessus.

On considère également un programme informatique comprenant des instructions qui, lorsqu'elles sont exécutées par le système d'authentification précité, amènent le système d'authentification à mettre en œuvre le procédé d'authentification décrit ici.

BRÈVE DESCRIPTION DES DESSINS

La figure 1 représente un document d'identification générique d'un type « carte ».

La figure 2 est un organigramme montrant un procédé de fabrication d'un document d'identification selon un aspect de l'invention.

La figure 3 est une représentation schématique du document d'identification de la figure 1 après l'impression d'un motif d'arrière-plan, dans deux modes de réalisation.

La figure 4 représente deux exemples de motifs d'arrière-plan.

La figure 5 est une représentation schématique des documents d'identification de la figure 3, dans laquelle une partie de motif est sélectionnée.

La figure 6 représente la portion de motif sélectionnée de l'un des documents d'identification de la figure 5, après la binarisation.

La figure 7 est une représentation schématique du codage de la partie de motif sélectionnée dans un mode de réalisation.

La figure 8 représente les documents d'identification de la figure 3, après l'impression d'un code lisible par machine.

La figure 9 est un organigramme montrant un procédé d'authentification d'un document d'identification selon un autre aspect de l'invention.

La figure 10 est un organigramme montrant le procédé d'authentification d'un document d'identification dans un autre mode de réalisation.

La figure 11 est une représentation schématique d'un document d'identification falsifié de la figure 8.

La figure 12 est une représentation schématique de l'authentification du document d'identification falsifié de la figure 11 à l'aide des informations authentifiées du code lisible par machine.

DESCRIPTION DÉTAILLÉE DE MODES DE RÉALISATION

Selon un premier aspect, l'invention décrit un document d'identification. Dans ce qui suit, le document d'identification pourrait être simplement appelé « document ». Le document d'identification peut être un document d'identification personnel parmi une carte d'identité personnelle, un permis de conduire ou un passeport. Un tel document d'identification personnel peut être couramment utilisé pour vérifier l'identité d'une personne, appelée titulaire.

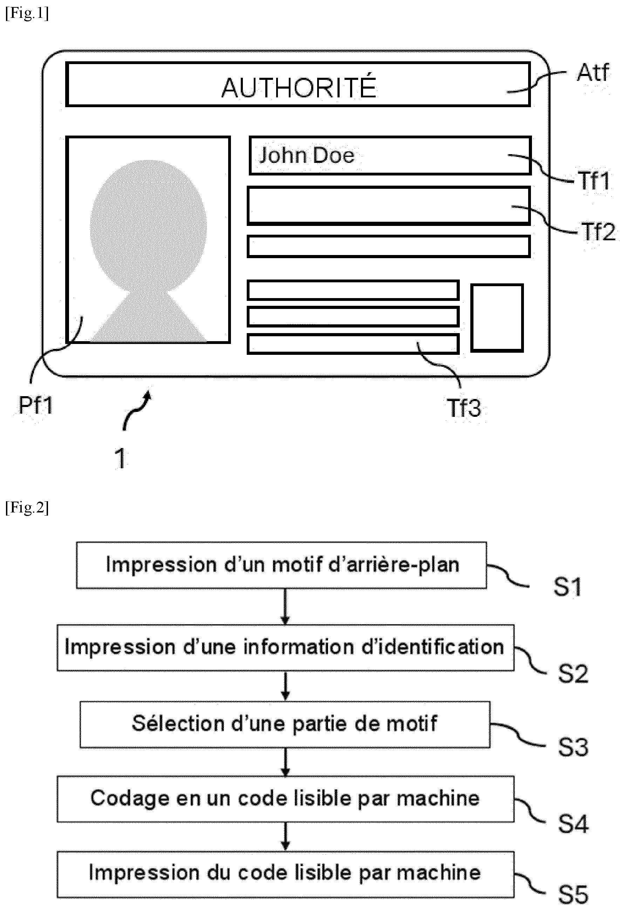

En référence à la figure 1, est illustrée une carte d'identité nationale générique. Le format du document d'identification ne se limite pas au format de carte, mais pourrait être étendu aux passeports ou autres documents attachés à l'identité d'une personne. On décrit ici un document d'identification personnel, mais plus généralement, le document d'identification peut être utilisé pour identifier un produit, un animal ou tout autre objet.

Classiquement, le document d'identification 1 comprend un champ image Pf1 dans lequel une image du titulaire peut être imprimée. Le document d'identification 1 comprend également différents champs de texte dans lesquels des informations générales peuvent être imprimées. Par « informations générales », il est entendu que les informations à imprimer ne sont soit pas liées au titulaire, soit pas liées directement et sans ambiguïté au titulaire. Par exemple, dans le champ de texte Atf situé en haut du document d'identification 1 est imprimé l'autorité ou l'organisme délivrant le document d'identification. Ce champ de texte ne peut pas varier d'un document d'identification 1 à l'autre dans une même catégorie de documents. Par exemple, dans le champ de texte Tf3 peuvent être imprimées d'autres informations générales telles qu'un code postal ou une date d'émission ou d'expiration du document. Ces informations peuvent être identiques d'un document d'identification à l'autre, par exemple pour tous les titulaires vivant dans la même zone.

**Le document** d'identification 1 comprend plusieurs champs de texte Tf1, Tf2 dans lesquels une information d'identification est imprimée ou à imprimer. L'information d'identification peut être une information d'identification personnelle (IIP), c'est-à-dire toute information sur le titulaire conservée par un organisme, qui peut être utilisée pour distinguer ou retracer son identité, comme son nom, son numéro de sécurité sociale, sa date et son lieu de naissance, son adresse de résidence, etc. L'information d'identification peut varier en longueur et comprendre plusieurs mots séparés par un espace vide. Les caractères peuvent comprendre des lettres majuscules ou minuscules et des chiffres.

Le document d'identification peut être délivré par une entité gouvernementale ou par des entités non gouvernementales, telles qu'une entité contractante d'un organisme gouvernemental. La fabrication du document d'identification 1 se fait habituellement à l'aide d'une machine d'impression. La machine d'impression est équipée d'un processeur configuré pour recevoir des informations provenant d'une interface. La machine d'impression peut comporter une mémoire pour stocker des informations ou des instructions. Le processeur peut accéder à la mémoire. L'interface comprend généralement un scanneur pour scanner le document d'identification imprimé et un écran pour afficher des informations. L'interface peut être utilisée pour entrer des informations et peut comprendre un clavier par exemple.

Selon un premier aspect illustré à la figure 2, l'invention concerne un procédé de fabrication d'un document d'identification sécurisé.

Un document d'identification vierge est d'abord obtenu. Au cours d'une étape S1 du procédé de fabrication, la machine d'impression imprime un motif d'arrière-plan 10a, 10b sur le document d'identification 1. Au cours d'une étape S2, la machine d'impression imprime une information d'identification dans un champ de texte du document d'identification 1. Dans les exemples illustrés, le champ de texte d'intérêt Tf1 correspond au nom complet du titulaire du document, de telle sorte que l'information d'identification est « John Doe ». L'information d'identification comprend cinq lettres minuscules et deux lettres majuscules.

En variante, ou en combinaison, l'information d'identification peut correspondre à toute autre information distinguant le titulaire du document et comprenant au moins un caractère, par exemple le nom, le prénom, le numéro de document, l'adresse, la date de naissance ou le numéro d'identification personnel. Par conséquent, les champs de texte correspondants ont un contenu sensiblement variable entre les titulaires.

Le champ de texte d'intérêt peut être identique ou varier pour plusieurs documents d'identification parmi une même catégorie de documents d'identification. Le champ de texte d'intérêt peut être identique ou varier en fonction des documents d'identification dans plusieurs catégories.

Le motif d'arrière-plan 10a, 10b comprend des motifs contrastés recouvrant au moins partiellement le champ de texte. Par « recouvrant », on entend que le motif d'arrière-plan s'étale sur le champ de texte (au moins partiellement), généralement sur un cadre rectangulaire, mais peut être sous-jacent ou superposé aux caractères imprimés dans le champ de texte Tf1.

Le motif d'arrière-plan 10a, 10b se distingue dans le sens qu'il diffère de l'arrière-plan du reste du document d'identification 1a, 1b. Par « motifs contrastés », on entend que les motifs ne sont pas flous et ne ressemblent pas à l'arrière-plan du reste du document d'identification 1a,1b.

Le motif d'arrière-plan 10a,10b présente un fort contraste. Par exemple, le rapport de contraste, c'est-à-dire le rapport entre l'intensité maximale et l'intensité minimale, est supérieur à 2:1. Un rapport de contraste de motif R est défini comme suit :

$$R = (\max(L1, L2) + 0{,}05)/(\min(L1, L2) + 0{,}05)$$

où L1 et L2 sont les valeurs de canal L, c'est-à-dire de luminance, obtenues après la conversion de l'image couleur RGB en une image HSL (teinte-saturation-luminance), pour le premier plan (1), par exemple les motifs, et l'arrière-plan (2), c'est-à-dire le reste du motif d'arrière-plan. De préférence, le rapport de contraste de motif R est supérieur à 2,0:1, plus préférablement supérieur à 3,0:1.

D'autres mesures pourraient inclure le contraste en moyenne quadratique (RMS), c'est-à-dire l'écart-type d'intensités de pixels normalisées par l'intensité moyenne. Dans un autre exemple, l'histogramme d'intensité de pixels n'est pas homogène, ce qui signifie ici que le motif d'arrière-plan 10a,10b comprend des pixels à forte variabilité d'intensité.

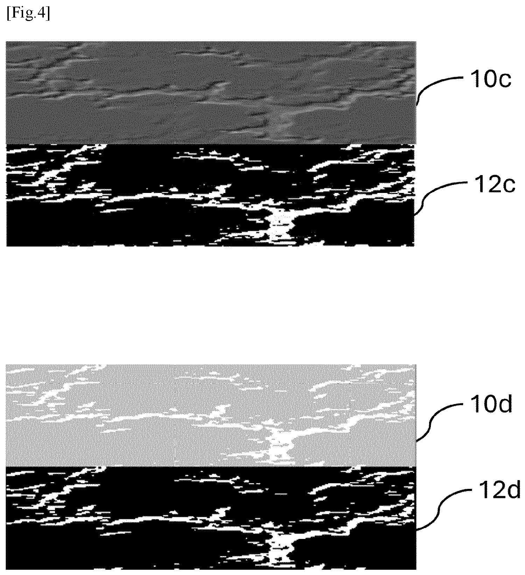

De préférence, le motif d'arrière-plan est conçu de manière à produire un résultat binaire prévisible lorsqu'un procédé de seuillage proposé par Nobuyuki Otsu dans « A threshold selection method from gray-level histograms ». IEEE Trans. Sys. Man. Cyber. 9 (1): 62-66 est appliqué. Dans les exemples illustrés à la figure 4, le motif d'arrière-plan 10c n'est pas considéré comme présentant un contraste élevé. En effet, les motifs ont des limites floues, et le motif binarisé 12c n'est pas prévisible. D'autre part, le motif d'arrière-plan 10d est utilisable pour l'application. C'est-à-dire que les pixels de premier plan et d'arrière-plan sont facilement distingués, et que le motif binarisé 12d peut être déterminé sans ambiguïté.

Avantageusement, les motifs contrastés sont facilement distinguables à l'aide d'une copie de qualité inférieure à 400 ppp. Cela permet à un dispositif d'authentification de pouvoir faire correspondre le document d'identification 1a, 1b avec une capture mobile de manière fiable, même si la capture mobile est de mauvaise qualité, par exemple présente un flou.

Le motif d'arrière-plan peut être identique pour plusieurs documents d'identification. Le motif d'arrière-plan peut varier entre les documents d'identification d'une même catégorie de documents d'identification ou entre plusieurs catégories.

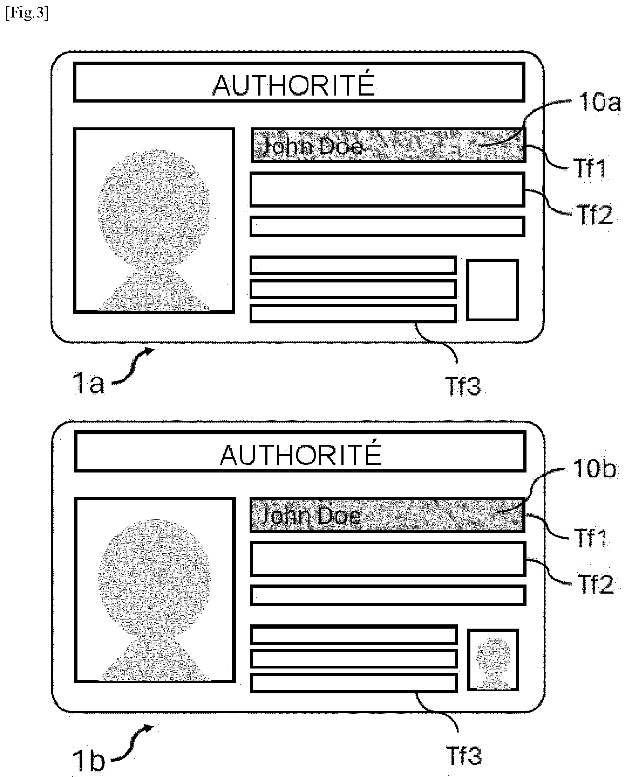

Par exemple, le document 1a donné à titre d'exemple en haut de la figure 3 présente un motif d'arrière-plan 10a avec des bords bien définis et un contraste plus élevé que le motif d'arrière-plan 10b du document 1b en bas de la figure 3.

De préférence, le motif d'arrière-plan 10a, 10b n'est pas périodique, c'est-à-dire que les motifs contrastés ne se reproduisent pas de façon identique en différents emplacements du champ de texte Tf1. Ceci augmente la fiabilité du procédé d'authentification pour les documents obtenus avec le procédé de fabrication proposé, comme décrit par la suite.

Le contraste entre le motif d'arrière-plan 10a, 10b et le caractère imprimé doit être suffisant i) pour que l'information d'identification soit lisible par l'homme et ii) pour que la reconnaissance optique de caractères soit réalisée avec succès sur une image du document d'identification 1a, 1b. Typiquement, les informations d'identification sont imprimées au-dessus du motif d'arrière-plan 10a, 10b avec une couleur sombre, proche de RGB=(0, 0, 0). De préférence, les caractères imprimés de l'information d'identification ont un rapport contraste sur bruit avec le motif d'arrière-plan 10a, 10b supérieur à 4,5:1.

Le rapport de contraste de motif R défini ci-dessus avec L1 correspondant au caractère et L2 correspondant au motif d'arrière-plan est supérieur à 1,5:1, de préférence supérieur à 2,0:1, et plus préférablement supérieur à 2,5:1.

Le motif d'arrière-plan 10a, 10b peut être imprimé avant ou après l'impression de l'information d'identification. De préférence, l'étape S1 est effectuée avant l'étape S2, c'est-à-dire que le motif d'arrière-plan distinctif est ajouté derrière la zone où l'information d'identification peut être imprimée pour le champ de texte considéré. Dans un mode de réalisation alternatif, où le motif d'arrière-plan 10a, 10b est imprimé au-dessus de l'information d'identification, le motif d'arrière-plan 10a, 10b doit être suffisamment transparent pour que l'information d'identification imprimée soit lisible par l'homme. En particulier, la transparence doit être suffisante pour que le rapport contraste sur bruit des caractères imprimés par rapport à l'arrière-plan imprimé soit supérieur à 4,5:1, ou pour que le rapport de contraste de motif des caractères imprimés par rapport à l'arrière-plan imprimé soit supérieur à 1,5:1, de préférence supérieur à 2,0:1, et plus préférablement supérieur à 2,5:1.

De préférence, le motif d'arrière-plan 10a, 10b recouvre toute la région du champ de texte Tf1. Par « toute la région », on entend que l'information d'identification écrite tient dans le motif d'arrière-plan 10a, 10b. Dans le mode de réalisation illustré, le motif d'arrière-plan 10a,10b recouvre entièrement le champ de texte Tf1 comprenant le nom complet. Le motif d'arrière-plan 10a,10b prend une forme rectangulaire dont la largeur et la longueur dépendent du champ de texte Tf1 choisi.

Une image du document d'identification 1a, 1b avec un motif d'arrière-plan 10a, 10b et une information d'identification imprimés est acquise par l'interface de la machine d'impression. L'image peut être une image scannée du document d'identification 1a, 1b comprenant au moins le champ de texte Tf1 d'intérêt. De préférence, l'image est acquise avec une qualité supérieure à 400 ppp.

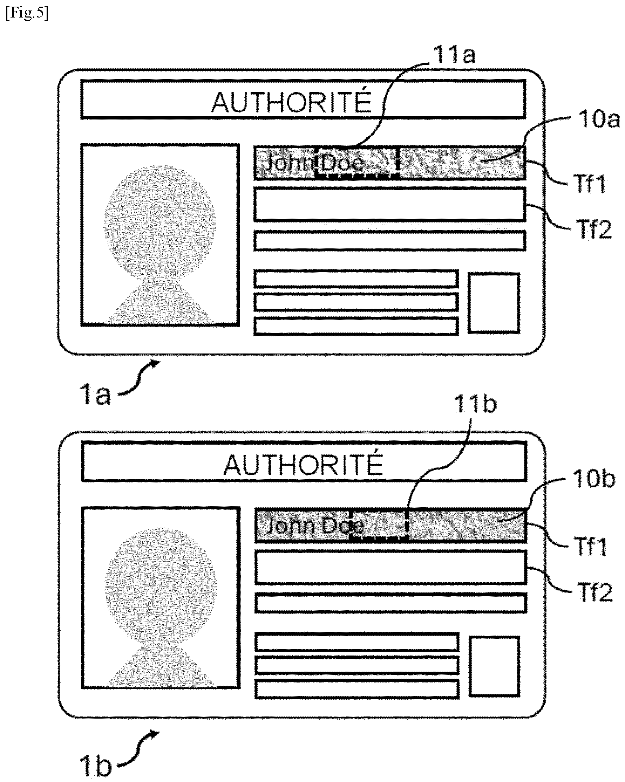

En référence à la figure 5, au cours d'une étape S3, le processeur sélectionne une partie de motif de l'image du document d'identification 1. La partie de motif sélectionnée 11a, 11b comprend au moins un caractère de l'information d'identification et une partie du motif d'arrière-plan se recouvrant, le motif d'arrière-plan pouvant être sous-jacent ou superposé aux caractères imprimés. En d'autres termes, la partie de motif 11a, 11b sélectionnée englobe à la fois la lettre ou le chiffre imprimé et certains motifs contrastés entourant l'information d'identification imprimée, par exemple des motifs à côté du caractère ou au-dessus ou en dessous du caractère, selon la taille des motifs et de l'interligne.

Typiquement, la partie de motif sélectionnée 11a, 11b est une portion rectangulaire recouvrant la dernière lettre de l'information d'identification et une partie du motif d'arrière-plan entourant la dernière lettre, appelée espace vide de fin.

En variante, ou en combinaison, la partie de motif sélectionnée comprend un caractère choisi de manière aléatoire dans l'information d'identification imprimée et une partie du motif d'arrière-plan 10a, 10b au-dessus et en dessous du caractère choisi. Il est particulièrement approprié que l'interligne soit suffisant et que les motifs contrastés du motif d'arrière-plan soient suffisamment petits pour s'assurer que la portion de motif 11a,11b sélectionnée comporte des motifs contrastés, tel qu'apprécié par exemple par le procédé de seuillage d'Otsu, comme mentionné précédemment. De préférence, la portion de motif 11a,11b sélectionnée est incluse dans le champ de texte recouvert par le motif d'arrière-plan 10a,10b, c'est-à-dire qu'elle ne comprend pas de partie de l'arrière-plan générique du document d'identification 1a,1b.

En variante, ou en combinaison, la partie de motif sélectionnée comprend plus d'un caractère de l'information d'identification. De préférence, la partie de motif 10a comprend une pluralité de caractères provenant de l'information d'identification. La partie de motif 10a peut comprendre plusieurs caractères adjacents ou être composée de différentes parties comprenant des caractères non adjacents. En particulier, le nombre de caractères dans la partie de motif sélectionnée dépend de la mémoire ou de l'espace de stockage de données disponible. Par exemple, plusieurs lettres provenant de l'ensemble de l'information d'identification peuvent être stockées en plus de la dernière lettre et de l'espace vide de fin.

Dans un autre mode de réalisation, plusieurs motifs d'arrière-plan sont imprimés sur plusieurs champs de texte, et une partie de motif est sélectionnée à partir de chaque champ de texte recouvert par un motif d'arrière-plan respectif.

Au cours d'une étape S4, le processeur code la partie de motif 11a sélectionnée en un code lisible par machine. La partie de motif 11a sélectionnée peut être codée elle-même en tant que représentation, par exemple une matrice de pixels de valeurs binarisées. De préférence, la partie de motif 11a sélectionnée est codée en tant que vecteur caractéristique. Cette variante ne nécessite pas de binarisation et est connue pour être plus adaptée aux couleurs, dans un mode de réalisation où la partie de motif sélectionnée n'est pas convertie en niveaux de gris, l'espace mémoire nécessaire étant facilement aussi faible que quelques centaines d'octets. Différents procédés peuvent être utilisés pour extraire des caractéristiques. Par exemple, une transformation de caractéristiques à échelle constante ( « Scale-Invariant Feature Transform » ou SIFT), des caractéristiques robustes accélérées (« Speeded Up Robust Feature » ou SURF) ou la méthode KAZE génèrent des descripteurs basés sur des chaînes de caractères, tandis e méthode FAST Orientée, BRIEF Rotatif (ORB), des points clés binaires robustes invariants et évolutifs (« binary robust invariant scalable keypoints » ou BRISK) ou une méthode KAZE Accéléré (AKAZE) génèrent des descripteurs binaires. La correspondance de caractéristiques peut alors être réalisée en utilisant une norme L1 ou L2 pour des descripteurs basés sur des chaînes de caractères, ou la distance de Hamming pour des descripteurs binaires, par exemple.

D'autres procédés de correspondance de caractéristiques comportent des procédés d'approximation des plus proches voisins (« approximate nearest neighbors » ou FLANN) et de recherche exhaustive, communément appelés méthodes par force brute (« Brut Force » ou BF).

Le code lisible par machine peut comporter un code-barre, un code à réponse rapide (code QR) ou tout autre code symbologique. Le code lisible par machine peut coder des informations d'identification personnelles du titulaire du document d'identification 1a. Les codes-barres sont unidimensionnels, ce qui signifie que des informations ne peuvent être scannées qu'horizontalement. Les codes QR sont bidimensionnels, ce qui signifie que des informations peuvent être lues à la fois horizontalement et verticalement, ce qui permet de stocker plus de données.

Typiquement, la partie de motif 11a est extraite de l'image du document d'identification 1a.

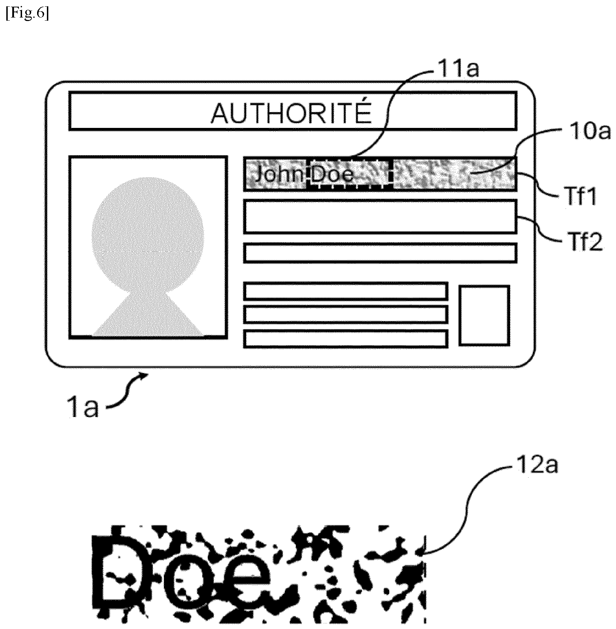

Éventuellement, en référence à la figure 6, la partie de motif sélectionnée 11a est binarisée pour obtenir une partie de motif binarisée 12a. Par « binarisation », on entend que les pixels de la partie de motif 11a sélectionnée sont mis à deux valeurs différentes, par exemple 0 ou 1, après la binarisation. Par exemple, si la partie de motif 11a sélectionnée est en couleur, la partie de motif 11a sélectionnée est d'abord convertie en niveaux de gris. Chaque pixel de la partie de motif 11a sélectionnée a une valeur comprise entre 0 (noir) et 255 (blanc). Ensuite, une valeur seuil de binarisation est sélectionnée. Pendant la binarisation, toute valeur de pixel supérieure à la valeur seuil de binarisation est définie à une première valeur (généralement 255 ou 1 pour le blanc), et inférieure à 0 (noir). L'utilisation de la binarisation permet d'économiser de l'espace mémoire pour un encodage ultérieur dans un code lisible par machine. De préférence, le motif d'arrière-plan 10a est conçu de manière à produire un résultat binaire prévisible lorsque la méthode de seuillage d'Otsu est appliquée, comme mentionné précédemment.

De préférence, le processeur compresse la partie de motif 11a, 12a sélectionnée. Ceci permet de limiter la mémoire nécessaire pour stocker la partie de motif 11a, 12a sélectionnée. De préférence, la partie de motif 11a, 12a sélectionnée est fortement compressée, c'est-à-dire que l'espace mémoire nécessaire pour stocker la partie de motif 11a, 12a compressée est divisé par un facteur supérieur à 10. De préférence, l'espace mémoire nécessaire pour stocker la partie de motif 11a, 12a compressée est inférieur à 1 kilo-octet.

Dans un mode de réalisation, le processeur applique à la partie de motif 11a, 12a sélectionnée un algorithme de compression avec perte tel qu'une compression JPEG. Cependant, comme la partie de motif 11a, 12a sélectionnée comprend des bords aigus ou arêtes vives associés au caractère de texte, un algorithme de compression avec perte pourrait provoquer des distorsions visuelles appelées effets d'écho (ou « *ringing effect* »). De préférence, le processeur applique à la partie de motif 11a, 12a sélectionnée un algorithme de compression sans perte tel qu'une compression PNG. Un algorithme de compression sans perte est particulièrement avantageux si le motif d'arrière-plan 10a est choisi de telle sorte qu'un simple prétraitement permette de créer de manière fiable une représentation binaire 12a du texte et de l'arrière-plan. Par exemple, un motif d'arrière-plan en niveaux de gris avec un contraste élevé de 400x100 pourrait être stocké au format PNG sur 2446 octets. L'utilisation d'une compression dans une partie de motif de tableau de bits en niveaux de gris avec une représentation de 1 octet par pixel conduirait à 40 000 octets. Dans ce contexte, une compression serait nécessaire, par exemple en utilisant une représentation binaire de 1 bit par pixel, supportée par PNG, et en réduisant l'image à 1216 octets. Une autre alternative consiste à recadrer cette représentation octet par pixel à 100x100 et à enregistrer le PNG binaire, réduisant l'espace mémoire nécessaire à 437 octets.

La compression est particulièrement intéressante dans le mode de réalisation où plusieurs motifs d'arrière-plan pour différents champs de texte sont utilisés. En effet, l'espace de stockage sur le code lisible par machine est limité. Par exemple, la capacité de stockage d'un code QR à très haute densité peut atteindre 1700 octets mais nécessite un scanner de documents dédié pour être décodé. D'autre part, un code QR moins dense est lisible par d'autres médias tels qu'un smartphone mais a une capacité de stockage inférieure à 1000 octets.

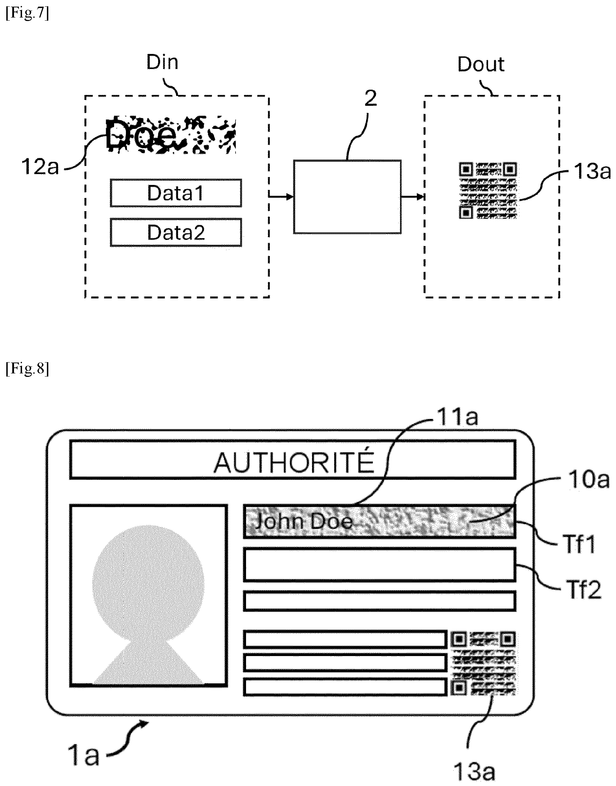

De préférence, en référence à la figure 7, le processeur 2 code en outre des informations de métadonnées Data1, Data2 dans le code lisible par machine 13a. En d'autres termes, la charge utile du code lisible par machine 13a permet de récupérer des métadonnées appropriées et la partie de motif 12a binarisée codée dans le code QR 13a. Par exemple, les informations de métadonnées Data1, Data2 comprennent la valeur seuil de binarisation, un indicateur de quel ou quels champs de texte ont été sélectionnés, une information d'emplacement telle que l'indice de chaque caractère sélectionné dans l'information d'identification, la dimension de la partie de motif 11a sélectionnée ou l'emplacement d'un bord de la partie de motif sélectionnée. Avantageusement, les informations de métadonnées peuvent comporter au moins une information d'emplacement. Par exemple, l'information d'emplacement est stockée sous forme d'un libellé ou d'un indice du champ de texte d'intérêt, dans le cas où le champ de texte d'intérêt a un numéro imprimé à côté de lui et comprend une plage de début et une plage de fin du caractère. Dans le cas où l'espace vide de fin est inclus dans la partie de motif, la plage d'arrêt incrémentée (plage d'arrêt +1) pourrait correspondre à l'espace vide de fin. En variante, l'information d'emplacement est stockée sous forme de définition d'une boîte de délimitation (« *bounding box* ») en pixels à 400 ppp définissant la région d'intérêt, c'est-à-dire le contour de la partie de motif à l'intérieur du document d'identification.

Comme décrit par la suite, les informations de métadonnées peuvent également comporter des informations utiles pour l'authentification du document, par exemple un seuil de score suggéré ou un seuil de sécurité suggéré ou un procédé de correspondance suggéré.

De préférence, le code lisible par machine est signé numériquement. Comme expliqué précédemment, la partie de motif 11a sélectionnée peut être binarisée avant la création de la signature numérique, ou la partie de motif 11a sélectionnée peut être binarisée et compressée davantage avant la création de la signature numérique.

Typiquement, une seule signature numérique est calculée sur toutes les données à stocker, comprenant par exemple de multiples parties de motifs et métadonnées sélectionnées comme décrit ci-dessus. La signature numérique est ensuite ajoutée à la charge utile avant que le code lisible par machine ne soit produit et imprimé sur le document d'identification.

L'ajout d'une signature signée numériquement au code lisible par machine permet d'améliorer la sécurité du document d'identification 1a. En effet, une tentative d'usurpation du document en modifiant le code lisible par machine serait détectée. Seule une autorité de vérification disposant d'une clé sécurisée peut valider avec précision les informations codées sur le code lisible par machine en les faisant correspondre à une clé de signature.

En référence à la figure 8, la machine d'impression imprime ensuite le code lisible par machine sur le document d'identification 1a. Ici, le code lisible par machine 13a est imprimé en bas à droite du document d'identification 1a.

Le code lisible par machine peut être imprimé à n'importe quel emplacement adéquat du document d'identification 1a, y compris une face ou une page différente du document d'identification 1a. Le code lisible par machine est représenté ici sur le recto du document 1a, mais il pourrait se trouver au verso s'il est trop grand pour être affiché sur le recto du document avec un format de carte. En variante, la machine d'impression peut imprimer le code lisible par machine sur un substrat séparé qui est ensuite définitivement fixé, par exemple collé, au document d'identification 1a.

De préférence, le code lisible par machine est au moins partiellement ou entièrement imprimé avec de l'encre ultraviolette. Cela rend le code lisible par machine moins évident sur le document d'identification et plus difficile à usurper. Le niveau de sécurité est donc amélioré. Le code lisible par machine imprimé avec de l'encre UV pourrait être lu par un scanner à éclairage multispectral mais ne pourrait pas être lu par un appareil mobile. Ceci permet également d'imprimer un code lisible par machine dans un format plus grand sans masquer les champs de texte du document. Le code lisible par machine imprimé à l'encre UV peut être imprimé sur l'ensemble du document. Un grand code est plus facile à lire par un scanner à éclairage multispectral. Cela implique également que toute modification d'une partie du document pourrait potentiellement casser le code lisible par machine et conduire à un résultat négatif dans l'authentification. En variante, le code lisible par machine est imprimé à l'encre UV sur un portrait fantôme du document d'identification, c'est-à-dire sur une version plus petite de l'image photographique originale sur le document imprimé semi-translucide.

De préférence, le code lisible par machine est imprimé sur le document d'identification avec une qualité comprise entre 200 ppp et 400 ppp. Ce niveau de qualité est standard de sorte que le procédé de fabrication peut être mis en œuvre par toute machine d'impression de documents d'identification. En fonction de la taille de la charge utile de partie de motif compressée, un code lisible par machine à haute densité peut être nécessaire, ce qui pourrait nécessiter une résolution d'impression égale ou supérieure à la limite supérieure de cette plage. Par exemple, le code lisible par machine à haute densité est imprimé avec une qualité comprise entre 400 ppp et 600 ppp. Comme mentionné ci-dessus, le code lisible par machine à haute densité offre une capacité de stockage plus élevée mais nécessite des scanners spécifiques pour être lu.

Le niveau de qualité choisi est suffisant pour l'authentification, comme décrit par la suite.

Selon un autre aspect, le document d'identification peut être authentifié pour identifier l'identité du titulaire. Le procédé d'authentification est mis en œuvre par un système d'authentification comprenant un processeur. Le système d'authentification comprend une mémoire pour stocker des données, par exemple des clés de sécurité utilisées pour signer numériquement les codes lisibles par machine ou des informations de métadonnées utilisées pour fabriquer le document d'identification. Le processeur peut accéder à la mémoire. La mémoire stocke un programme informatique comprenant des instructions pour mettre en œuvre le procédé d'authentification décrit ici.

Par exemple, le système d'authentification peut être un dispositif de balayage, par exemple lors d'un contrôle de sécurité à la frontière. Le document d'identification peut être reçu par le dispositif de balayage avant l'embarquement sur un vol international. Le dispositif de balayage peut comprendre un scanner avec des caméras photosensibles pour scanner le recto ou le verso du document d'identification dans différentes conditions d'éclairage telles que lumière visible, infrarouge et ultraviolet. Les caméras photosensibles peuvent comprendre, par exemple, un dispositif à couplage de charge.

En variante, le système d'authentification peut être un dispositif mobile tel qu'un téléphone mobile équipé d'une caméra appartenant à un agent ou officier de sécurité. L'authentification du titulaire peut être effectuée pour contrôler l'accès à un bâtiment sécurisé ou lors d'une routine quotidienne telle que le contrôle du trafic.

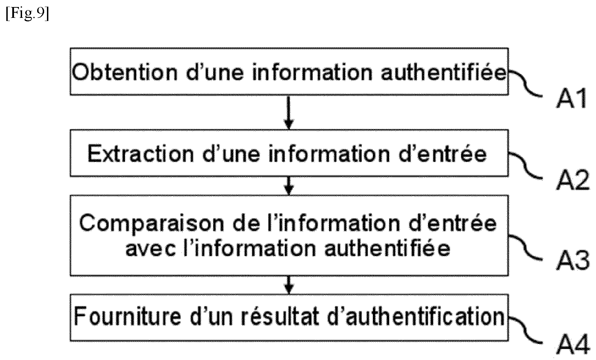

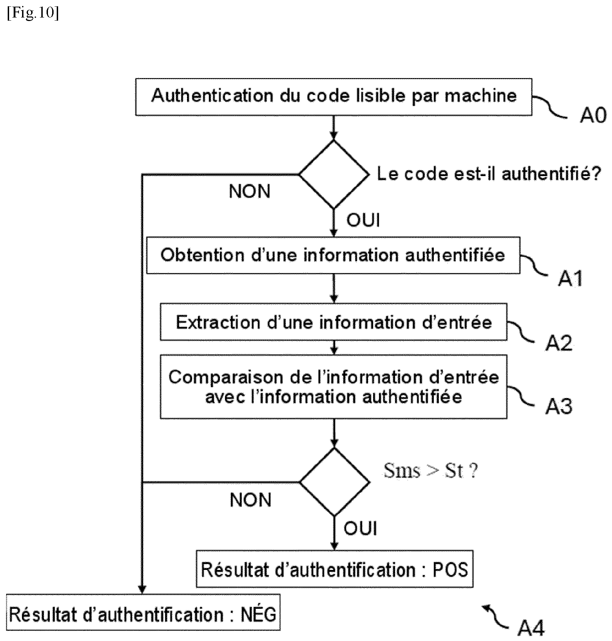

Un document d'identification obtenu en utilisant le procédé de fabrication proposé peut ensuite être authentifié en utilisant un procédé d'authentification tel qu'illustré sur les figures 9 et 10.

Le système d'authentification obtient d'abord une image représentant le document d'identification à authentifier. L'image du document d'identification peut comprendre à la fois le champ de texte d'intérêt et le code lisible par machine. En variante, plusieurs images du document d'identification peuvent être acquises, par exemple une première image comprenant le code lisible par machine, et une seconde image comprenant le champ de texte d'intérêt. Ici, l'image de document d'entrée comprend au moins le code QR 13a imprimé sur le document et le champ de texte Tf1. L'image de document d'entrée peut être obtenue à l'aide d'un scanner ou d'un appareil photo.

Au cours de l'étape A1, le système d'authentification obtient au moins une information authentifiée correspondant à une partie de champ de texte du document d'identification, en décodant le code lisible par machine. En d'autres termes, le code lisible par machine peut être scanné de sorte que les informations identifiables personnellement codées du titulaire du document d'identification sont extraites.

De préférence, lors d'une étape préliminaire A0, le processeur effectue une authentification du code lisible par machine en validant la signature numérique utilisée pour chiffrer le code lisible par machine. Ceci permet d'accélérer le procédé d'authentification en délivrant directement un résultat d'authentification négatif si la signature numérique n'est pas validée. Le processeur peut utiliser des clés de chiffrement stockées dans la mémoire pour valider le code lisible par machine scanné.

Au cours d'une étape A2, le processeur extrait au moins une information d'entrée de l'image du document d'identification. L'information d'entrée extraite comprend la partie de champ de texte du document d'identification.

L'information d'entrée extraite peut correspondre à une partie de l'image de document d'entrée. La partie correspond typiquement à un rectangle légèrement surdimensionné de l'image de document d'entrée qui comporte la dernière lettre du champ de texte d'intérêt et l'espace vide de fin comprenant le motif d'arrière-plan. De préférence, les informations d'entrée extraites comprennent également des caractères stockés additionnellement. Par exemple, le processeur peut mettre en œuvre la reconnaissance de caractères optique (OCR). Après traitement par OCR sur les informations d'entrée, l'emplacement du dernier caractère et de tout caractère stocké additionnellement de l'information d'identification dans le champ de texte d'intérêt est connu.

La mémoire du système d'authentification peut stocker une information relative à la position de la partie de motif à authentifier. En variante, les informations peuvent être stockées dans une mémoire accessible par le système d'authentification. Les informations comprennent, par exemple, le champ de texte d'intérêt ou les dimensions de la partie de motif utilisée lors de la fabrication du document d'identification.

En outre, ou en variante, les informations sont intégrées dans le code lisible par machine imprimé sur le document d'identification pour authentification. Les informations sont ensuite récupérées en lisant directement le code lisible par machine. Ceci est particulièrement avantageux dans un mode de réalisation où le champ de texte d'intérêt ou la partie de motif sélectionnée varie pour une catégorie de documents d'identification.

Au cours d'une étape A3, le processeur du système d'authentification compare l'information d'entrée extraite à l'information authentifiée.

La comparaison donne lieu à un score de correspondance de similarité Sms. Le score de correspondance de similarité Sms est calculé par le processeur à partir de l'information d'entrée extraite et de l'information authentifiée par correspondance de modèle. Par exemple, le score de correspondance de similarité Sms est un coefficient de corrélation, une somme de différences au carré ou une corrélation croisée. Certaines mesures de correspondance de modèle, telles que la somme de différences au carré, peuvent fournir nativement des scores numériquement plus petits pour de meilleures correspondances. Dans de tels cas, le score de correspondance de similarité est de préférence converti d'un score de distance en un score de similarité, par exemple en utilisant une version de normalisation de la métrique pour obtenir un score de différence normalisé dans la plage [0,0 ; 1,0], et en calculant ensuite la différence entre 1,0 et le score de différence normalisé obtenu.

Dans le mode de réalisation où des caractéristiques de la partie de motif sélectionnée sont codées dans le code lisible par machine, au lieu d'effectuer une correspondance de modèle, des caractéristiques similaires de l'image d'entrée peuvent être extraites au cours de l'étape A3 et une correspondance de caractéristiques est effectuée.

De préférence, le processeur met en œuvre un algorithme de mise à l'échelle avant la comparaison pour s'assurer que la ou les informations d'entrée extraites sont mises à l'échelle au même précision en point par pouce effective que la ou les informations authentifiées, c'est-à-dire la partie de motif codée dans le code lisible par machine. Ceci permet d'améliorer la fiabilité du score de correspondance de similarité Sms.

De préférence, lors de l'extraction de l'information d'entrée, si un prétraitement quelconque a été appliqué à la partie de champ de texte, tel qu'un seuillage pour binarisation, les mêmes opérations sont appliquées à l'information d'entrée.

De préférence, le calcul du score de correspondance de similarité est effectué en niveaux de gris ou en noir et blanc, c'est-à-dire avec des images binarisées. Cela augmente la fiabilité du score de correspondance de similarité car les variations d'éclairage dans les environnements de capture mobile peuvent rendre la présentation de couleurs dans les images numériques de documents incohérente et la correspondance des motifs de couleurs moins fiable.

Par exemple, dans un mode de réalisation dans lequel l'information authentifiée est une image en niveaux de gris, le processeur convertit l'information d'entrée extraite en une image en niveaux de gris avant la comparaison.

Par exemple, dans un mode de réalisation dans lequel l'information authentifiée est une image en noir et blanc, le système d'authentification obtient d'abord la valeur seuil de binarisation. La valeur seuil de binarisation peut être récupérée par lecture du code lisible par machine ou stockée dans la mémoire du système d'authentification. Ensuite, le processeur convertit l'information d'entrée extraite en une image en noir et blanc sur la base de la valeur seuil de binarisation avant la comparaison.

Dans un mode de réalisation où plusieurs motifs d'arrière-plan sont utilisés sur différents champs de texte, et plusieurs parties de motif sont sélectionnées et stockées sur le code lisible par machine, les étapes précédentes sont itérées pour chacune des parties de motif stockées. En d'autres termes, chaque partie de motif stockée est mise en correspondance avec sa zone de recherche correspondante individuellement.

De préférence, si la qualité de l'image d'entrée extraite est inférieure à un seuil de qualité, le système d'authentification envoie un avertissement à une interface indiquant que la comparaison ne peut pas être effectuée et signale une authentification non concluante. Dans ce cas, l'opérateur exécutant le système d'authentification peut fournir une nouvelle image d'entrée pour extraire une information d'entrée de meilleure qualité.

Au cours d'une étape A4, le système d'authentification fournit un résultat d'authentification basé sur le score de correspondance de similarité Sms.

Par exemple, le résultat d'authentification est positif, c'est-à-dire que le document d'entrée réussit le test d'authentification si le score de correspondance de similarité Sms est supérieur à une valeur de seuil de sécurité St ; ou le résultat d'authentification est négatif, c'est-à-dire que le document d'entrée n'est pas authentifié, si le score de correspondance de similarité Sms est inférieur à la valeur de seuil de sécurité St. La valeur de seuil de sécurité peut être stockée dans la mémoire du système d'authentification. En variante, le seuil de sécurité peut être codé à l'intérieur du code lisible par machine en tant que partie des informations de métadonnées. Dans ce cas, la valeur de seuil de sécurité est obtenue ultérieurement à l'étape A1 lors de la lecture du code lisible par machine.

Le seuil peut varier entre différentes conceptions de carte. Il peut être fixe ou varier selon la catégorie des documents d'identification. De préférence, la valeur de seuil de sécurité peut varier en fonction de la nature du code lisible par machine. Par exemple, dans un mode de réalisation où le code lisible par machine est un code-barre 2D à capacité de stockage limitée, les informations authentifiées sont de faible résolution en raison d'une compression élevée avant le codage. Dans ce contexte, le seuil de sécurité est inférieur au seuil de sécurité qui pourrait être utilisé dans un mode de réalisation où le code lisible par machine est un code QR avec une capacité de stockage plus élevée et des informations authentifiées de meilleure résolution.

Dans le mode de réalisation où plusieurs motifs d'arrière-plan sont utilisés, de préférence, tous les scores de correspondance de similarité doivent être supérieurs au seuil de sécurité correspondant pour délivrer un résultat d'authentification positif qui constitue une authentification réussie du document.

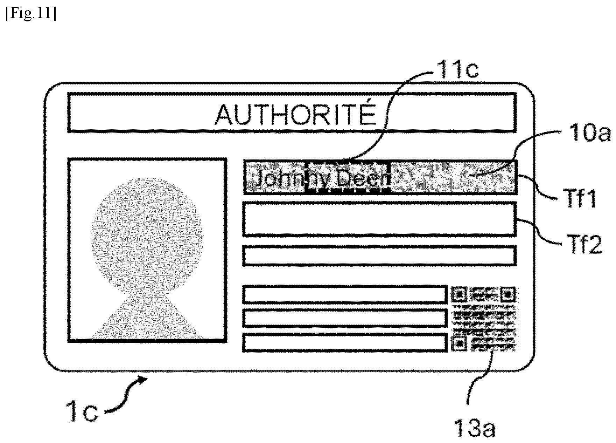

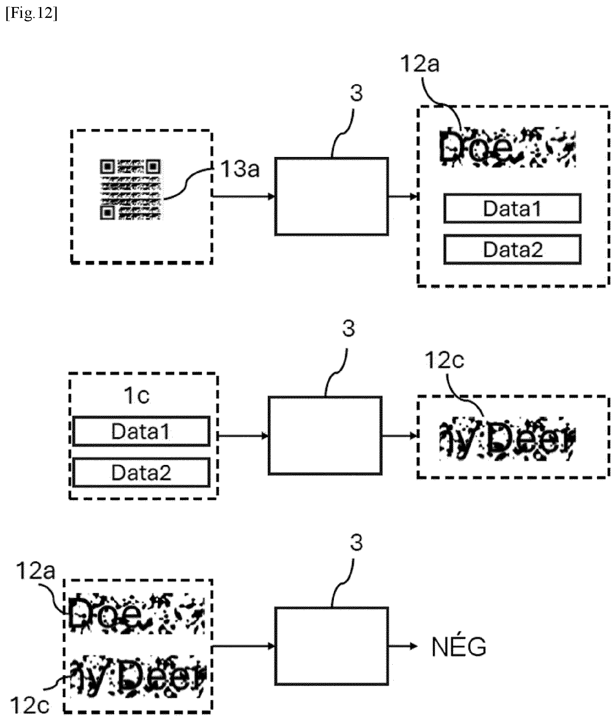

Comme l'illustrent les figures 11 et 12, l'un des avantages des procédés proposés est qu'ils sont basés sur une conception de document commune à tous les titulaires, mais la partie de motif sélectionnée est unique pour la plupart des titulaires en fonction de la longueur de leur information d'identification et du caractère sélectionné dans le champ de texte d'intérêt.

Les figures 11 et 12 illustrent la fiabilité du procédé d'authentification proposé, dans le cas où un fraudeur part du document 1 obtenu en utilisant le procédé de fabrication à partir du document générique illustré sur la figure 1 et du document sécurisé 1a sur la figure 8.

Pour obtenir le document 1c falsifié représenté sur la figure 11, le fraudeur a ici effacé le nom original « John Doe » et lui a ensuite substitué un nom plus long « Johnny Deer ». En résulte le document 1c d'identification d'aspect visuellement raisonnable, de sorte que le document 1c falsifié pourrait passer des contrôles reposant uniquement sur des motifs statiques, voire des tests basés sur des recoupements de données, si le fraudeur sait également usurper d'autres sources de données connexes telles que des zones lisibles par machine (MRZ).

La figure 12 illustre les différentes étapes du procédé d'authentification dans ce cas.

Le processeur 3 récupère la partie de motif binarisée 12a et les informations de métadonnées Data1, Data2 par lecture du code QR 13a. De préférence, la signature numérique du code QR 13a est préalablement vérifiée. Si la vérification du code QR 13a échoue, le document 1c ne peut pas être authentifié. Une erreur ou un résultat d'authentification négatif est signalé à l'agent de surveillance. Sinon, si la vérification du code QR 13a réussit, la partie de motif sélectionnée initiale récupérée est considérée comme sûre. L'authentification du code QR se produit avantageusement avant le traitement ultérieur. Ceci permet de gagner du temps et de ne pas calculer le score de correspondance de similarité.

À l'aide des informations de métadonnées Data1, Data2 et de l'image du document 1c falsifié, le processeur 3 extrait une partie de motif correspondante et applique une binarisation pour obtenir l'information d'entrée 12c. Ensuite, la partie de motif récupérée est mise en correspondance de modèle avec la partie sélectionnée de l'image de document d'entrée. Le processeur 3 compare l'information authentifiée 12a correspondant à la partie de motif sélectionnée binarisée initiale et l'information d'entrée 12c correspondant à la partie de motif sélectionnée binarisée du document 1c falsifié.

Dans le cas illustré, la région de motif nouvellement sélectionnée comporte des caractères différents puisque le nouveau nom est plus long. Par conséquent, la position de la dernière lettre du champ de texte de nom a changé. En utilisant le procédé d'authentification proposé, le résultat d'authentification est négatif, en raison de la faible valeur du score de correspondance de similarité entre les motifs sélectionnés. En effet, les deux parties de motif ne correspondent pas. Le processeur 3 délivre à l'agent de surveillance un résultat d'authentification négatif, et le document 1c falsifié n'est pas authentifié.

Dans un autre cas où le processeur 3 utilise l'OCR pour détecter l'emplacement du dernier caractère et où la partie de motif sélectionnée comprend le dernier caractère et l'espace vide de fin, le motif d'arrière-plan est également différent puisque la longueur totale de l'information d'identification a changé. Par conséquent, les deux parties de motif ne correspondent pas et le document n'est pas authentifié.

Ce procédé d'authentification résiste particulièrement aux changements de l'information d'identification qui rallongent ou raccourcissent le texte imprimé dans le champ de texte d'intérêt. Dans les deux cas, même si le nouveau texte se termine par le même caractère que l'original, une section différente du motif d'arrière-plan sera capturée lors de l'échantillonnage à un emplacement différent dans le champ de texte d'intérêt. Les tentatives d'utilisation d'une police alternative ou d'une taille de police différente pour conserver la même longueur avec un nombre de caractères différent doivent également être détectées avec cette approche car la forme du dernier caractère dans le champ de texte ne correspondra plus à celle stockée dans la partie de motif sélectionnée initiale.

## Revendications

1. Procédé de fabrication d'un document d'identification (1), comprenant les étapes suivantes :

   • impression sur le document d'identification (1) d'un motif d'arrière-plan (S1), le motif d'arrière-plan (10a, 10b) comprenant des motifs contrastés recouvrant au moins partiellement un champ de texte (Tf1) du document d'identification ;
   • impression d'une information d'identification (S2) dans le champ de texte (Tf1), l'information d'identification comprenant un ou plusieurs caractères ;
   • sélection d'une partie de motif (S3) d'une image du document d'identification (1), la partie de motif (11a, 11b) comprenant au moins un caractère de l'information d'identification et une partie du motif d'arrière-plan se recouvrant ;
• codage de la partie de motif sélectionnée (11a, 12a) en un code lisible par machine (S4) ;
• impression (S5) du code lisible par machine (13a) sur le document d'identification (1).

2.  Procédé de fabrication d'un document d'identification (1) selon la revendication 1, dans lequel les motifs contrastés du motif d'arrière-plan (10a, 10b) ne recouvrent pas périodiquement le champ de texte (Tf1).

3.  Procédé de fabrication d'un document d'identification (1) selon l'une des revendications 1 et 2, dans lequel l'au moins un caractère est le dernier caractère de l'information d'identification, et la partie de motif (11a, 11b) sélectionnée comprend une partie du champ de texte (Tf1) qui suit le dernier caractère.

4.  Procédé de fabrication d'un document d'identification (1) selon l'une des revendications 1 à 3, dans lequel le codage de la partie de motif (11a, 12a) sélectionnée comprend la binarisation de la partie de motif (11a) sélectionnée en utilisant un seuil de binarisation.

5.  Procédé de fabrication d'un document d'identification (1) selon l'une quelconque des revendications 1 à 4, comprenant en outre une étape de codage d'informations de métadonnées dans le code lisible par machine (13a) avant l'impression du code lisible par machine (13a) sur le document d'identification (1), les informations de métadonnées comprenant au moins une information parmi une information d'emplacement de la partie de motif sélectionnée dans le document d'identification, et un seuil de sécurité pour l'authentification du document d'identification.

6.  Procédé de fabrication d'un document d'identification selon l'une quelconque des revendications 1 à 5, comprenant en outre une étape de signature chiffrée du code lisible par machine (13a) avant l'impression du code lisible par machine signé sur le document d'identification (1).

7.  Procédé de fabrication d'un document d'identification selon l'une quelconque des revendications 1 à 6, dans lequel le code lisible par machine (13a) est imprimé sur le document d'identification (1) avec une qualité comprise entre 200 ppp et 400 ppp.

8.  Procédé de fabrication d'un document d'identification (1) selon l'une quelconque des revendications 1 à 7, dans lequel le code lisible par machine (13a) est imprimé au moins partiellement avec de l'encre ultraviolette, de préférence sur un portrait fantôme du document d'identification (1).

9.  Procédé de fabrication d'un document d'identification selon l'une quelconque des revendications 1 à 8, dans lequel le code lisible par machine est un code QR.

10. Document d'identification (1) comprenant au moins un champ de texte (Tf1) dans lequel est imprimée une information d'identification, l'information d'identification comprenant un ou plusieurs caractères et un motif d'arrière-plan (10a, 10b) étant imprimé sur le document d'identification (1), le motif d'arrière-plan (10a, 10b) comprenant des motifs contrastés recouvrant au moins partiellement le champ de texte (Tf1), et un code lisible par machine (13a) étant imprimé sur le document d'identification (1), le code lisible par machine (13a) codant une partie de motif d'une image du document d'identification (1) qui comprend au moins un caractère de l'information d'identification et une partie du motif d'arrière-plan se recouvrant.

11. Document d'identification (1) selon la revendication 10, étant un document d'identification personnel parmi une carte d'identité personnelle, un permis de conduire ou un passeport.

12. Procédé d'authentification d'un document d'identification selon l'une des revendications 10 et 11, comprenant les étapes suivantes :

• obtention d'une information authentifiée (A1) correspondant à une partie de champ de texte du document d'identification (1), par décodage du code lisible par machine (13a) ;
• extraction d'une information d'entrée (A2) d'une image du document d'identification (1), l'information d'entrée extraite comprenant la partie de champ de texte du document d'identification (1) ;
• comparaison de l'information d'entrée extraite avec l'information authentifiée (A3), la comparaison aboutissant à un score de correspondance de similarité (Sms) ;

• fourniture d'un résultat d'authentification (A4) à partir du score de correspondance de similarité (Sms).

13. Procédé d'authentification selon la revendication 12, comprenant en outre l'obtention d'une information d'emplacement par lecture du code lisible par machine (13a), l'information d'entrée étant extraite à partir de l'information d'emplacement.

14. Procédé d'authentification selon l'une des revendications 12 et 13, dans lequel l'information authentifiée est une image en niveaux de gris, et comprenant en outre une conversion de l'information d'entrée extraite en une image en niveaux de gris avant la comparaison.

15. Système d'authentification comprenant un processeur configuré pour mettre en œuvre le procédé d'authentification selon l'une des revendications 12 à 14.

[Fig.1]

AUTHORITÉ — Atf

John Doe — Tf1

Tf2

Pf1

1

Tf3

[Fig.2]

| Impression d'un motif d'arrière-plan | S1 |
| Impression d'une information d'identification | S2 |
| Sélection d'une partie de motif | S3 |
| Codage en un code lisible par machine | S4 |
| Impression du code lisible par machine | S5 |

[Fig.3]

AUTHORITÉ

John Doe

10a

Tf1

Tf2

1a

Tf3

AUTHORITÉ

John Doe

10b

Tf1

Tf2

1b

Tf3

[Fig.4]

10c

12c

10d

12d

[Fig.5]

[Fig.6]

[Fig.7]

Din       Dout

12a     2     13a

Data1

Data2

[Fig.8]

11a

AUTHORITÉ

10a

John Doe

Tf1

Tf2

1a

13a

[Fig.9]

| Obtention d'une information authentifiée | A1 |

| Extraction d'une information d'entrée | A2 |

| Comparaison de l'information d'entrée avec l'information authentifiée | A3 |

| Fourniture d'un résultat d'authentification | A4 |

[Fig.10]

Authentication du code lisible par machine — A0

Le code est-il authentifié?
NON / OUI

Obtention d'une information authentifiée — A1

Extraction d'une information d'entrée — A2

Comparaison de l'information d'entrée avec l'information authentifiée — A3

$Sms > St$ ?
NON / OUI

Résultat d'authentification : POS

Résultat d'authentification : NÉG

— A4

[Fig.11]

EP 4 718 408 A1

[Fig.12]

23

**RAPPORT DE RECHERCHE EUROPEENNE**

Numéro de la demande

EP 25 19 7377

Europäisches Patentamt
European Patent Office
Office européen des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2009/307112 A1 (COWBURN RUSSELL PAUL [GB] ET AL) 10 décembre 2009 (2009-12-10) * alinéa [0001] - alinéa [0181] * * figures 1-14 * | 1-15 | INV. G07D7/0043 G07D7/12 G07D7/20 G07D7/2033 |
| X | WO 2023/061374 A1 (PROCTER & GAMBLE [US]; STONEHOUSE JONATHAN RICHARD [CN]) 20 avril 2023 (2023-04-20) * alinéa [0001] - alinéa [0064] * * figures 1-5 * | 1-15 | |
| A | US 2008/149713 A1 (BRUNDAGE TRENT J [US]) 26 juin 2008 (2008-06-26) * alinéa [0004] - alinéa [0181] * * figures 1-7 * | 1-15 | |
| A | US 2006/061088 A1 (HARRINGTON STEVEN J [US] ET AL) 23 mars 2006 (2006-03-23) * alinéa [0027] - alinéa [0056] * * figures 1-11 * | 1-15 | |
| A | US 2023/052463 A1 (SPIVACK NOVA [US] ET AL) 16 février 2023 (2023-02-16) * alinéa [0095] - alinéa [0121] * * figures 1-3 * | 1-15 | **DOMAINES TECHNIQUES RECHERCHES (IPC)** G07D |

Le présent rapport a été établi pour toutes les revendications

| Lieu de la recherche | Date d'achèvement de la recherche | Examinateur |
|---|---|---|
| La Haye | 19 décembre 2025 | Seifi, Mozhdeh |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 25 19 7377**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**19-12-2025**

| Document brevet cité au rapport de recherche | Date de publication | Membre(s) de la famille de brevet(s) | Date de publication |
|---|---|---|---|
| US 2009307112 A1 | 10-12-2009 | GB 2460625 A | 09-12-2009 |
| | | GB 2460734 A | 16-12-2009 |
| | | US 2009283583 A1 | 19-11-2009 |
| | | US 2009307112 A1 | 10-12-2009 |
| | | WO 2009138750 A1 | 19-11-2009 |
| | | WO 2009138751 A1 | 19-11-2009 |
| WO 2023061374 A1 | 20-04-2023 | CN 115983866 A | 18-04-2023 |
| | | WO 2023061374 A1 | 20-04-2023 |
| US 2008149713 A1 | 26-06-2008 | AUCUN | |
| US 2006061088 A1 | 23-03-2006 | AUCUN | |
| US 2023052463 A1 | 16-02-2023 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Littérature non-brevet citée dans la description**

- **NOBUYUKI OTSU**. A threshold selection method from gray-level histograms. *IEEE Trans. Sys. Man. Cyber.*, vol. 9 (1), 62-66